# EUROPEAN PATENT SPECIFICATION

(11) **EP 0 633 277 B1**
(45) Date of publication and mention of the grant of the patent: **03.09.1997**
(21) Application number: 94109819.6
(22) Date of filing: 24.06.1994
(51) Int. Cl.: C08G 18/66, C08G 18/48

(54) **Thermoplastic polyurethane and thermoplastic resin molded product containing same**
Thermoplastisches Polyurethan und ein dieses enthaltendes thermoplastisches Formstück
Polyuréthane thermoplastique et produit moulé de résine thermoplastique le contenant

(30) Priority: 05.07.1993 JP 192051/93
(43) Date of publication of application: 11.01.1995
(73) Proprietor: TAKEDA BADISCHE URETHANE INDUSTRIES, LTD., Tokyo (JP)
(72) Inventor: Hirono, Takahiko, Amagasaki, Hyogo (JP); Higashi, Sachio, Suita, Osaka (JP); Suzuki, Yasuyuki, Kuwana, Mie (JP)
(74) Representative: Langfinger, Klaus-Dieter, Dr.

(56) References cited:
- BE-A- 675 661
- US-A- 3 983 094
- JOURNAL OF APPLIED POLYMER SCIENCE: APPLIED POLYMER SYMPOSIUM, vol.50, 1992, NEW YORK pages 309 - 320 S. KOMATSUZAKI ET AL.: 'New thromboresistant polyurethane elastomers using two kinds of polyethers as soft segment'

## Description

This invention relates to thermoplastic polyurethane and a thermoplastic resin molded product containing same. Thermoplastic resin molded products including film, sheet, covering materials are widely utilized. Among these molded products, from the view-points of their uses, many of them require water vapor permeability, and, some of them often require chemical destaticizing properties. The present invention relates to such a thermoplastic polyurethane and a thermoplastic resin molded product obtained therefrom which is excellent per se in water vapor permeability, and relates to such a thermoplastic resin molded product, having durable antistatic properties which do not lower the properties even after washing with water, by incorporating said polyurethane into another thermoplastic resin.

As a means of imparting a thermoplastic resin molded product with water vapor permeability or antistatic properties, addition of an alkane sulfonic acid metal salt, carbon powder or metal powder to the said thermoplastic resin are conventionally conducted. However, in these conventional means, there are counted such drawbacks, namely, when the resultant molded product is washed with water, its water vapor permeability or antistatic properties are remarkably reduced, thus inviting poor durability of these products, and, besides, desirable coloration of the resultant molded products are impossible.

Circumstances being such as above, as a means of imparting water vapor permeability or antistatic properties to a thermoplastic resin molded product, use of a composition prepared by adding thermoplastic polyurethane to a thermoplastic resin has been proposed (JPA H3 (1991)-259947, JPA H3 (1991)-259957). These proposals have, on one hand, such an advantage as coloring desirably on the resultant molded product, but, on the other hand, such drawbacks are inevitable as sufficient water vapor permeability or antistatic properties being hardly imparted, and, even when imparted, its durability is poor, and the properties of the molded products themselves being deteriorated.

The problems that the present invention is to solve lie in that, in the proposals so far made using thermoplastic polyurethane, sufficient water vapor permeability or antistatic properties cannot be imparted to the resultant molded product or, even when imparted, its durability is poor, and the properties of the molded products themselves are deteriorated.

Under such circumstances, the present inventors conducted diligent studies to solve the above-mentioned problems, and found that the thermoplastic polyurethane obtained by the reaction of a specific isocyanate component, chain extender and polyol in a specific molar ratio of the active hydrogen components in them is advantageously preferable.

More specifically, this invention relates to thermoplastic polyurethane obtained by the reaction of the following materials: as an isocyanate component, being employed 4,4'-methylenebisphenylisocyanate; as a chain extender, being employed 1,4-butanediol; as a polyol component, poly (tetramethylene ether) glycol of a molecular weight of 1000-4500 and a random polyoxypropylene polyoxyethylene polyol of a molecular weight of 1000-3000; and, among these materials, the molar ratio of active hydrogen components being polyoxypropylene polxyoxyethylene polyol/{poly (tetramethylene ether)glycol + 1,4-butanediol} = 1/2 - 1/4.2, and to a thermoplastic resin molded product containing same.

In the present invention, 4,4'-methylenebisphenylisocyanate is employed as the starting isocyanate component. Among the isocyanate component to be employed as a starting material of thermoplastic polyurethane, there are counted, besides, various ones such as toluenediisocyanate, 1,5-naphthalenediisocyanate and hexamethylenediisocyanate. Use of these isocyanate components, as compared with the cases where using 4,4'-methylenebisphenylisocyanate, its handling or workability are not satisfactory due to its high vapor pressure, and the mechanical properties of the resulting thermoplastic polyurethane are also undesirable.

And, in the present invention, as the chain extender, 1,4-butanediol is employed. Among chain extenders employable as a material of thermoplastic polyurethane, besides 1,4-butanediol, are counted diethylene glycol, triethylene glycol, 1,5-pentanediol or 1,6-hexanediol. Use of these chain extenders, as compard with the case of using 1,4-butanediol, gives poor moldability or mechanical properties of the resulting thermoplastic polyurethane.

The starting polyol components in the present invention are poly(tetramethylene ether)glycol whose molecular weight ranges from 1000 to 4500 and random polyoxypropylene polyoxyethylene polyol whose molecular weight ranges from 1000 to 3000. As polyol components to be employable for the starting materials of thermoplastic polyurethane, besides the above materials, there are counted polyester diol or polybutadiene diol. Use of these polyol components gives mechanical properties of the resulting thermoplastic polyurethane which are inferior to the case of using poly(tetramethylene ether)glycol. The molecular weight of poly(tetramethylene ether)glycol employed as the polyol component ranges from 1000 to 4500. When the molecular weight is not more than 1000, the mechanical properties of the resulting thermoplastic polyurethane becomes inferior, and, conversely, when it it 4500 or larger, the workability becomes bad.

Random polyoxypropylene polyoxyethylene copolymer to be employed as the polyol component is important from the viewpoint of imparting high water vapor permeability to the resulting thermoplastic polyurethane. While the said polxyoxypropylene polyoxyethylene polyol has a molecular weight ranging from 1000 to 3000, a polyol whose total oxyethylene content is 50 weight % or more is preferable. When the molecular weight is 1000 or less, the water vapor permeability imparted is insufficient, while, when it is 3000 or more, the workability becomes bad. Among, these polxyoxypropylene polyoxyethylene polyols, a random polyol especially a random glycol is preferable, because water swelling of the random polyol is less than that of block polyols.

In the present invention, as the starting materials, the isocyanate component, chain extender and polyol component as described above are employed. Among these starting materials, those in which the molar ratio of active hydrogen components consisting of the chain extender and polyol component is in the range of random polyoxypropylene polyoxyethylene polyol to {poly(tetramethylene ether)glycol and 1,4-butanediol} = 1/2 to 1/4.2, are employed. When the said molar ratio is not less than 1/2, the resulting thermoplastic polyurethane becomes too soft, conversely, when the said ratio becomes smaller than 1/4.2, the resulting thermoplastic polyurethane becomes too rigid which is an adequate to practical use.

The thermoplastic polyurethane of the present invention, as explained above, is obtained by using a specific isocyanate component, chain extender and polyol component, and allowing the reaction to proceed in the specified molar ratio of the active hydrogen components. The reaction is preferably allowed to proceed within the molar ratio of the isocyanate component to active hydrogen component being in the range of 1/0.95 - 1/1.03. While the reaction can be conducted by a conventional method such as prepolymer method or one-shot method, pre-polymer method is preferably employed, because the molded product prepared by the resulting thermoplastic polyurethane, for example, film, is less tacky. When the reaction is conducted, a conventional urethanization catalyst, stabilizer, compatabilizer or colorant can be conveniently supplemented.

The thus-obtained thermoplastic polyurethane has itself good mechanical properties and high water vapor permeability. The product molded by using the polyurethane, for example, extrusion-molded film and filament can be used as materials for sheet, cover, clothes and medical care including bandage, sticking paste or which requires high water vapor permeability.

And, addition of the thermoplastic polyurethane of the present invention to other thermoplastic resin, for example, polypropylene, polystyrene, polyamide, acrylic resin, methacrylic resin, vinyl acetate resin, vinyl acetate resin, vinyl chloride resin or polyvinylidene chloride resin serves to impart such an excellent durable antistatic properties as causing no lowering of the effects even by subjecting the material to washing with water.

### Examples

### Test Section 1

### Example 1

A reaction vessel was charged with 50 g of poly(tetramethylene ether)glycol having a molecular weight of 1000 and 1100 g of polyoxypropylene polyoxyethylene polyol having a molecular weight of 2200 (random copolymer whose total oxyethylene content being 80 weight % and having terminal polyoxyethylene), which was heated at temperatures ranging from 70 to 80°C.

To the reaction mixture was added, while stirring, 382.5 g of 4,4'-methylenebisphenylisocyanate which was heated up to 50°C in advance. Then the reaction was allowed to proceed for 2 minutes. To the reaction mixture was further added 85.5 g of 1,4-butanediol which was heated up to 50°C beforehand, then the reaction was allowed to proceed for 2 minutes. The reaction mixture was transferred to a tray and aged for 4 hours at 140°C. The bulk polymer thus obtained was granulated, which was pelletized by a conventional process to give pellet (A) of thermoplastic polyurethane. This pellet (A) was molded by subjecting to extruder with flat-die to obtain Film (a).

### Example 2

Using 176 g of poly (tetramethylene ether) glycol having a molecular weight of 3000, 788.6 g of polyoxypropylene polyoxyethylene polyol which is the same one as employed in Example 1, 423 g of 4,4'-methylenebisphenylisocyanate and 111.4 g of 1,4-butanediol, the reaction was allowed to proceed in substantially the same manner as in Example 1 to obtain Pellet (B) and Film (b) of thermoplastic polyurethane.

### Example 3

Using 120 g of poly (tetramethylene ether) glycol having a molecular weight of 3000, 880 g of polyoxypropylene polyoxyethylene polyol which is the same one as employed in Example 1, 530 g of 4,4'-methylenebisphenylisocyanate and 148 g of 1,4-butanediol, the reaction was allowed to proceed in substantially the same manner as in Example 1 to obtain Pellet (C) and Film (c) of thermoplastic polyurethane.

### Comparative Example 1

Using 50 g of poly (tetramethylene ether) glycol having a molecular weight of 1000, 1100 g of polyoxypropylene polyoxyethylene polyol which is the same one as employed in Example 1, 344.2 g of 4,4'-methylenebisphenylisocyanate and 72 g of 1,4-butanediol, the reaction was allowed to proceed in substantially the same manner as in Example 1 to obtain Pellet (D) and Film (d) of thermoplastic polyurethane.

### Comparative Example 2

Using 40 g of poly (tetramethylene ether) glycol having a molecular weight of 1000, 880 g of polyoxypropylene polyoxyethylene polyol which is the same one as employed in Example 1, 561 g of 4,4'-methylenebisphenylisocyanate and 158 g of 1,4-butanediol, the reaction was allowed to proceed in substantially the same manner as in Example 1 to obtain Pellet (E) and Film (e) of thermoplastic polyurethane.

### Comparative Example 3

Using 525 g of poly (tetramethylene ether) glycol having a molecular weight of 1000, 525 g of poly (tetramethylene ether) glycol having a molecular weight of 2000, 438 g of 4,4'-methylenebisphenylisocyanate and 86.5 g of 1,4-butanediol, the reaction was allowed to proceed in substantially the same manner as in Example 1 to obtain Pellet (F) and Film (f) of thermoplastic polyurethane.

### Comparative Example 4

Using 735 g of poly (tetramethylene ether) glycol having a molecular weight of 1000, 102 g of polyoxypropylene polyoxyethylene polyol having a molecular weight of 3900 (block copolymer-polyol in which the total content of oxyethylene being 20 weight %, having polyoxyethylene terminals), 538 g of 4,4'-methylenebisphenylisocyanate and 124 g of 1,4-butanediol, the reaction was allowed to proceed in substantially the same manner as in the case of Example 1 to give Pellet (G) and Film (g) of thermoplastic polyurethane.

### Comparative Example 5

A reaction vessel was charged with 460 g of poly (tetramethylene ether) glycol having a molecular weight of 1000, 460 g of polyoxypropylene polyoxyethylene polyol (block copolymer-polyol whose total content of oxyethylene being 50 weight %, having polyoxyethylene terminals) and 103.5 g of 1,4-butanediol, which was heated at teperatures ranging from 70 to 80°C. To the reaction mixture was added, while stirring, 460 g of 4,4'-methylenebisphenylisocyanate heated up to 50°C in advance, then the reaction was allowed to proceed for 2 minutes. The reaction mixture was transferred to a tray and aged for 4 hours at 140°C. Resulting bulk polymer was granulated, which was then pelletized by a conventional means to give Pellet (H) of thermoplastic polyurethane. This Pellet (H) was molded by means of an extruder with flat-die to give Film (h).

The molar ratio of active hydrogen component polyoxypropylene polyoxyethylene polyol /{poly(tetramethylene ether) glycol + 1,4-butanediol} in each Example, water vapor permeability, appearance and touch of the film obtained in each Example are shown in Table 1.

**Table 1**

| Section | Film | Molar ratio | water vapor permeability | appearance and touch |
|---|---|---|---|---|
| Ex. 1 | a | 1/2.0 | 4400 | good |
| 2 | b | 1/3.6 | 6000 | good |
| 3 | c | 1/4.2 | 5800 | good |
| C. Ex. 1 | d | 1/1.7 | 4000 | soft |
| 2 | e | 1/4.5 | 3800 | a little hard |
| 3 | f | - | 2400 | good |
| 4 | g | - | 2700 | good |
| 5 | h | 1/5.0 | 3100 | almost good |

In Table 1, water vapor permeability was determined by means of Cup Method (JIS ZO202), showing in terms of 15 micrometer of film thickness. Unit: g/m².24 hr.

### Test Section 2

### Examples 4 to 6

Using Pellet (A) of the thermoplastic polyurethane obtained in Example 1 and ABS (Trade Name TFX450, manufactured by Mitsubishi Chemical Industries, Ltd.), respective Pellet (A)/ABS were blended 1/9 (Example 4), 2/8 (Example 5) and 3/7 (Example 6), which was subjected to injection molding to give a molded board of 10 x 16 x 0.2 cm. Each molded board was left standing at 23°C for 24 hours under the atmosphere of 50% RH. Then the respective surface resistance was measured. Then, each molded board was immersed in water for 30 minutes, which was taken out of the water, removing the water deposited, followed by leaving standing at 23°C for 24 hours under the atmosphere of 50% RH. Then the respective surface resistance was measured.

### Comparative Example 6

Using Pellet (F) of the thermoplastic polyurethane obtained in Comparative Example 3 and ABS which is the same as in the cases of Examples 4 to 6, Pellet (F)/ABS was blended at a weight ratio of 2/8. Then, in substantially the same manner as in the cases of Examples 4 to 6, molded boards were obtained and their surface resistance were measured.

### Comparative Example 7

Blending was substantially the same manner as in the case of Comparative Example 6, while 2 weight % of sodium salt of alkanesulfonic acid as a chemical destaticizer, followed by processing in substantially the same manner as in the cases of Examples 4 to 6 to give the respective molded boards, whose surface resistance was measured.

### Comparative Example 8

Using only the same ABS as in the cases of Examples 4 to 6, followed by processing in substantially the same manner as in the cases of Examples 4 to 6 to give the the respective molded boards, whose surface resistance was measured.

The surface resistance of each example was measured by means of a resistance measuring device (Type R8340, manufactured by Advantest Inc.). The results are shown in Table 2.

**Table 2**

| Section | Surface Resistance (Ω) | |
|---|---|---|
| | Before immersion in water | After immersion in water |
| Ex. 4 | 5.3 x 10¹⁴ | 5.9 x 10¹⁴ |
| 5 | 1.3 x 10¹³ | 1.5 x 10¹³ |
| 6 | 2.5 x 10¹² | 2.8 x 10¹² |
| C. Ex. 6 | 2.7 x 10¹⁵ | 3.0 x 10¹⁵ |
| 7 | 2.1 x 10¹⁴ | 1.0 x 10¹⁵ |
| 8 | 3.4 x 10¹⁶ | 3.9 x 10¹⁶ |

As clarified from the foregoing, the present invention is usefull as providing a molded product which is excellent in water vapor permeability and in durable antistatic properties, without deterioration of mechanical properties.

## Claims

1. A thermoplastic polyurethane obtained by the reaction of
a) 4,4'-methylenebis(phenylisocyanate),
b) a mixture of
b1) a poly(tetramethylene ether) glycol having a molecular weight in the range of 1000 to 4500 and
b2) a random polyoxypropylene polyoxyethylene polyol having a molecular weight in the range of 1000 to 3000 and
c) 1,4-butanediol,
the molar ratio of active hydrogen components (b) and (c) polyoxypropylene polyoxyethylene polyol (b2) to poly(tetramethylene ether) glycol (b1) and 1,4-butanediol (c) being 1:2 to 1:4.2.

2. The thermoplastic polyurethane claimed in claim 1, in which the random polyoxypropylene polyoxyethylene polyol is a random glycol.

3. The thermoplastic polyurethane claimed in claim 1 or claim 2, which is obtained by allowing the reaction to proceed with a prepolymer method.

4. A thermoplastic resin molded product containing the thermoplastic polyurethane claimed in 1, 2 or 3.

## Patentansprüche

1. Thermoplastisches Polyurethan, hergestellt durch Umsetzung von
a) 4,4'-Methylenbis(phenylisocyanat),
b) einem Gemisch aus
b1) einem Poly(tetramethylenether)glykol mit einem Molekulargewicht im Bereich von 1000 bis 4500 und
b2) einem statistischen Polyoxypropylenpolyoxyethylen-polyol mit einem Molekulargewicht im Bereich von 1000 bis 3000 und
c) 1,4-Butandiol,
wobei die aktiven Wasserstoff enthaltenden Komponenten (b) und (c) in einem Molverhältnis von Polyoxypropylenpolyoxyethylen-polyol (b2) zu Poly(tetramethylenether)glykol (b1) und 1,4-Butadinol (c) von 1:2 bis 1:4,2 vorliegen.

2. Thermoplastisches Polyurethan nach Anspruch 1, wobei es sich bei dem statistischen Polyoxypropylenpolyoxyethylen-polyol um ein statistisches Glykol handelt.

3. Thermoplastisches Polyurethan nach Anspruch 1 oder 2, hergestellt durch eine Reaktionsführung nach dem Präpolymer-Verfahren.

4. Formkörper aus thermoplastischem Harz, enthaltend das thermoplastische Polyurethan nach Anspruch 1, 2 oder 3.

## Revendications

1. Polyuréthanne thermoplastique, obtenu par la réaction
a) du 4,4'-méthylènebis(phénylisocyanate),
b) un mélange
b1) d'un poly(tétraméthylèneéther)glycol, possédant un poids moléculaire qui varie de 1000 à 4500 et
b2) d'un polyoxypropylènepolyoxyéthylènepolyol stochastique, possédant un poids moléculaire qui varie de 1000 à 3000 et
c) du 1,4-butanedioll,
le rapport molaire des composants à hydrogènes actifs (b) et (c) du polyoxypropylènepolyoxyéthylènepolyol (b2) au poly(tétraméthylèneéther)glycol (b1) et au 1,4-butanediol (c) variant de 1:2 à 1:4,2.

2. Polyuréthanne thermoplastique suivant la revendication 1, caractérisé en ce que le polyoxypropylènepolyoxyéthylènepolyol stochastique est un glycol stochastique.

3. Polyuréthanne thermoplastique suivant la revendication ou la revendication 2, que l'on obtient en laissant la réaction se dérouler selon une méthode au prépolymère.

4. Produit moulé en résine thermoplastique contenant le polyuréthanne thermoplastique de la revendication 1, 2 ou 3.
